# EUROPÄISCHE PATENTSCHRIFT

(11) **EP 2 808 234 B1**
(45) Veröffentlichungstag und Bekanntmachung des Hinweises auf die Patenterteilung: **26.12.2018**
(21) Anmeldenummer: 14156432.8
(22) Anmeldetag: 24.02.2014
(51) Int. Cl.: B62D 63/08, B62B 3/06, B60P 1/02

(54) **Routenzuganhänger mit einer Hubeinrichtung**
Trailer with a lifting device for carts train
Remorque pour train de chariots avec dispositif de levage

(30) Priorität: 01.06.2013 DE 102013009386
(43) Veröffentlichungstag der Anmeldung: 03.12.2014
(73) Patentinhaber: Jungheinrich Aktiengesellschaft, 22047 Hamburg (DE)
(72) Erfinder: Kraase, Arne, 21337 Lüneburg (DE); Ziemann, Jörg, 1676 Kråkeroy (NO)
(74) Vertreter: Hauck Patentanwaltspartnerschaft mbB

(56) Entgegenhaltungen:
- EP-A2- 2 161 182
- EP-A2- 2 311 673
- EP-A2- 2 319 745
- DE-U1-202012 002 489

## Beschreibung

Die vorliegende Erfindung betrifft einen Routenzuganhänger mit einer Hubeinrichtung für einen Rollwagen, die den Routenzuganhänger zwischen einer abgesenkten Aufnahmeposition für den Rollwagen und einer angehobenen Transportposition für den Rollwagen verstellen kann.

Bei der innerbetrieblichen Logistik spielen Routenzüge eine zunehmende Rolle. In einem Routenzug werden von einem Schleppfahrzeug mehrere mit zu transportierenden Gütern beladene Routenzuganhänger geschleppt. Jeder Routenzuganhänger kann einen Rollwagen oder ein anderes Transportbehältnis aufnehmen. Bei Routenzuganhängern mit einer Hubeinrichtung ist vorgesehen, dass ein Rollwagen mit seinen relativ kleinen Rollen, die nur einen langsamen Transport über kurze Strecken erlauben, auf den Routenzuganhänger geladen und über dessen Hubeinrichtung angehoben werden, bis die Räder des Rollwagens freikommen und keinen Bodenkontakt mehr haben. Nachfolgend wird der Rollwagen dann auf dem Routenzuganhänger mit seinem Schleppverband geschleppt, wobei der Routenzuganhänger mit größeren Rädern mit weicheren Laufflächen ausgestattet ist, die einen schnelleren Transport auch über längere innerbetriebliche Strecken zulassen.

Um möglichst wenig Platz für den Routenzug zu benötigen werden die Routenzuganhänger in der Regel sehr kompakt nach Möglichkeit mit Abmessungen nur wenig größer als der aufzunehmende Rollwagen gebaut. Dies führt dazu, dass an dem Routenzuganhänger wenig Platz für mögliche Bedienelemente vorhanden ist. In der Regel erforderlich sind Bedienelemente, die ein Heben und Senken des Routenzuganhängers betätigen und die aufgenommenen Rollwagen auf dem Routenzuganhänger sichern bzw. dessen Sicherung wieder lösen. Erforderlich für Routenzuganhänger sind Bedienelemente, die ein Sichern des Rollwagens auf den Routenzuganhängern und dessen Entsichern erlauben. Hinzu kommen die notwendigen Bedienelemente, die ein Anheben und Absenken des Routenzuganhängers auslösen. Beide Bedienelemente sollen nach Möglichkeit in ergonomisch günstiger Weise an dem Routenzuganhänger vorgesehen sein.

Aus DE 20 2013 100 729 ist ein Routenzuganhänger mit einer Verriegelungsleiste und einem die Verriegelungsleiste verstellenden Stellhebel bekannt geworden. Der Stellhebel wird durch einen eingeschobenen Innenwagen betätigt, um diesen mit der Verriegelungsleiste in seiner eingeschobenen Position zu sichern.

Aus DE 20 2012 002 489 ist ein Routenzuganhänger bekannt geworden, der einen Näherungssensor zur Betätigung der Verriegelung und einen Fußschalter zum Öffnen der Verriegelung aufweist.

Aus EP 2 311 673 A2 ist ein Anhänger für einen Trailerzug bekannt geworden, der ein im Fahrtrichtung mittig angeordnetes Fahrwerk mit zwei seitlich an einer Achse gelagerten Rädern aufweist. Eine Hubeinrichtung mit mindestens einem Hydraulikzylinder ist zur Höhenverstellung des Tragrahmens relativ zum Fahrwerk vorgesehen. Beim Beladen des Anhängers wird ein Schieber vorgeschoben, wobei der Schieber ein Schaltventil der Hubeinrichtung betätigt und zugleich über eine Kulissensteuerung zwei am offenen Ende des Tragrahmens vorgesehene Bolzen betätigt.

Der Erfindung liegt die Aufgabe zugrunde, einen bekannten Routenzuganhänger mit Hub und Verriegelung für einen aufgenommenen Rollwagen dahingehend zu verbessern, dass nach Möglichkeit wenig und platzsparend angeordnete Bedienelemente erforderlich sind.

Erfindungsgemäß wird die Aufgabe durch einen Routenzuganhänger mit den Merkmalen aus Anspruch 1 gelöst. Vorteilhafte Ausgestaltungen bilden den Gegenstand der Unteransprüche.

Der erfindungsgemäße Routenzuganhänger ist mit einer Hubeinrichtung ausgestattet, die den Routenzuganhänger zwischen einer abgesenkten Aufnahmeposition für einen Rollwagen und einer angehobenen Transportposition für den Rollwagen verstellt. Die abgesenkte Aufnahmeposition und die angehobene Transportposition können erreicht werden, indem der gesamte Rahmen des Anhängers oder ein den Rollwagen tragender Abschnitt des Anhängers abgesenkt oder angehoben wird. Ferner ist an dem Routenzuganhänger eine mechanische Verriegelung für den Rollwagen vorgesehen, die den Rollwagen in der Transportposition auf dem Routenzuganhänger sichert. Bei einem Ver- und/oder Entriegeln des Rollwagens auf dem Routenzuganhänger wird selbsttätig, ohne weitere Maßnahmen, die Hubeinrichtung entsprechend betätigt. Bei dem erfindungsgemäßen Routenzuganhänger ist die Verriegelung des Rollwagens mit einer Betätigung der Hubeinrichtung gekoppelt, so dass zum Anheben des Routenzuganhängers keine separaten Bedienelemente erforderlich sind. Vielmehr wird, wenn der Rollwagen auf dem Routenzuganhänger verriegelt wird, dieser automatisch durch eine Betätigung der Hubeinrichtung angehoben. Ebenso wird, wenn der Rollwagen auf dem Routenzuganhänger entriegelt wird, ein Schalter betätigt und der Routenzuganhänger über die Hubeinrichtung selbsttätig abgesenkt. Hierzu ist ebenfalls ein mit der Hubeinrichtung zusammenwirkender zweiter Schalter vorgesehen, der durch die Betätigung einer die Verriegelung lösenden Entriegelung betätigt wird.

Erfindungsgemäß ist die mechanische Verriegelung durch einen in der Aufnahmeposition eingeschobenen Rollwagen betätigbar. Die mechanische Verriegelung sichert selbsttätig die Position des vollständig eingeschobenen Rollwagens. Durch eine derartige Verriegelung kann ein weiteres Bedienelement zur Verriegelung des Rollwagens auf dem Routenzuganhänger entfallen. Die Verriegelung des Rollwagens erfolgt vielmehr dadurch, dass dieser vollständig auf oder in den Routenzuganhänger eingeschoben und dabei seine Verriegelung so betätigt wird, dass sie selbsttätig den Rollwagen in seiner vollständig eingeschobenen Position sichert und die Hubeinrichtung auslöst, um den Routenzuganhänger anzuheben. Je nach Ausgestaltung der Hubeinrichtung kann bei einem Anheben des Rollwagens eine Betätigung der Verriegelung entlastet werden, indem ein mit dem Rollwagen in Kontakt stehender Abschnitt zunächst horizontal oder mit einem horizontalen Bewegungsanteil bewegt wird.

Erfindungsgemäß weist die Verriegelung mindestens einen Sicherungszapfen und zu jedem Sicherungszapfen einen Verriegelungsbolzen auf.

Der Sicherungszapfen ist in eine den Rollwagen sichernden Position vorgespannt. Der Verriegelungsbolzen wirkt mit dem Sicherungszapfen zusammen und hält den Sicherungszapfen gegen seine Vorspannung. Bei einem vollständig eingeschobenen Rollwagen gibt der Verriegelungsbolzen den Sicherungszapfen frei und dieser kann in seine den Rollwagen sichernde Position durch die Federvorspannung bewegt werden. Durch Zurückstellen des Sicherungszapfens kann dieser wieder von dem Verriegelungsbolzen gehalten werden.

In einer bevorzugten Weiterbildung ist die mechanische Verriegelung elastisch in ihre verriegelnde Position vorgespannt. Während der Aufnahme des Rollwagens wird die Verriegelung kurzzeitig in eine entriegelnde Position gedrückt und schnappt bei einem vollständig aufgenommenen Rollwagen in seine verriegelnde Position zurück. Die Verriegelung kann beispielsweise als federgespannter Schnapphaken ausgebildet sein, der durch das Aufschieben des Rollwagens zurückgedrückt wird und bei vollständig aufgeschobenem Rollwagen in diesen schnappend eingreift. Bevorzugt ist die Verriegelung mit einem Nocken ausgebildet, der das Betätigungselement für die Hubeinrichtung zum Anheben betätigt. Der Nocken ist ein separates oder einstückig mit der Verriegelung ausgebildetes Bauteil und gestattet, die Hubeinrichtung ansprechend auf eine Betätigung der Verriegelung zu betätigen.

Bevorzugt wird bei der Aufnahme des Rollwagens die Hubeinrichtung derartig betätigt, dass der Routenzuganhänger aus einer Aufnahmeposition in seine Transportposition angehoben wird und die Räder oder Rollen des Rollwagens freikommen.

In einer bevorzugten Ausgestaltung ist eine mechanische Entriegelung vorgesehen, die über ein von einem Benutzer betätigbares Entriegelungselement den Rollwagen freigibt. Bei dem von dem Benutzer betätigbaren Entriegelungselement handelt es sich um ein Betätigungselement, das sehr platzsparend und ohne großen zusätzlichen Aufwand an dem Routenzuganhänger vorgesehen werden kann.

Erfindungsgemäß wird die Hubeinrichtung zum Absenken des Routenzuganhängers aus der Transportposition in die Aufnahmeposition durch das Entriegelungselement betätigt. Der zweite Schalter für die Hubeinrichtung wird durch die Entriegelung betätigt, löst ein Absenken mit Hilfe der Hubeinrichtung aus und gibt somit die Verriegelung frei.

In einer bevorzugten Ausgestaltung weist die Entriegelung einen Fußhebel und/oder Fußtaster auf, der die Verriegelung für den aufgenommenen Rollwagen löst. Eine über den Fuß erfolgende Betätigung der Entriegelung ist insbesondere bei flach bauenden Routenzuganhängern von Vorteil, da hier eine ergonomisch günstige Entriegelung des Rollwagens erfolgen kann.

Bei einer bevorzugten Weiterbildung der Erfindung besitzt der Routenzuganhänger einen U- oder E-förmigen Rahmen, zwischen dessen außen liegenden Schenkeln der Rollwagen einschiebbar ist. Bei solchen U- oder E-förmigen Rahmen ist ein Einschieben des Rollwagens nur von einer Seite möglich. Grundsätzlich kann die Erfindung auch bei portalförmigen Rahmen für den Routenzuganhänger eingesetzt werden, die den Vorteil besitzen, dass der Rollwagen von beiden Seiten einschiebbar ist.

Bei der Ausgestaltung mit einem U- oder E-förmigen Rahmen für den Routenzuganhänger ist die Entriegelung an der offenen Seite des Rahmens angeordnet.

In einer bevorzugten Ausgestaltung ist ein Sensor vorgesehen, der sensiert, ob die Verriegelung verriegelt oder entriegelt ist und der bei einem Wechsel zu einer verriegelten Verriegelung einen Hubvorgang auslöst und bei einem Wechsel zu einer entriegelten Verriegelung einen Senkvorgang auslöst. Über den Sensor wird die Hubeinrichtung angesteuert, um einen Hub- oder einen Senkvorgang auszulösen. Dieser Vorgang erfolgt stets, wenn sich der Zustand der Verriegelung
einem Wechsel in den verriegelten Zustand wird ein Hubvorgang ausgelöst, da der Rollwagen vollständig in den Anhänger eingeschoben ist. Bei einem Wechsel in den entriegelten Zustand wird ein Senkvorgang eingeleitet, um den entriegelten Rollwagen abzusetzen.

In einer weiteren bevorzugten Ausgestaltung besitzt die Hub- und Senkbewegung eine vertikale und eine horizontale Komponente, wobei bei der Senkbewegung der Rollwagen aufgrund der horizontalen Bewegung aus dem Anhänger herausgeschoben wird. Die horizontale Komponente bei der Hub- und Senkbewegung betrifft einen Vorschub des Rollwagens um eine Strecke, die ungefähr auch der Hubhöhe entspricht oder kürzer als die Hubhöhe ist. Die horizontale Bewegung wird durch eine entsprechende Bewegung einer Hubplattform eines sonstigen den Rollwagen tragenden Rahmenabschnitts bewirkt. Die horizontale Bewegung bewirkt neben dem Herausschieben des Rollwagens und der damit verbundenen Ausrichtung seiner Räder auch, dass ein Betätigungselement an dem Anhängerrahmen, das beispielsweise durch ein Einschieben des Rollwagens betätigt wird, im nachfolgenden Hubvorgang entlastet ist.

Eine bevorzugte Ausführung der Erfindung wird nachfolgend anhand der Figuren näher beschrieben. Es zeigt:
- Fig. 1: einen Routenzuganhänger mit einem Rollwagen in einer perspektivischen Ansicht von der Seite,
- Fig. 2: den Routenzuganhänger aus Fig. 1 mit aufgenommenen Rollwagen,
- Fign. 2A-B: Details zur Verriegelung und Entriegelung des Rollwagens,
- Fign. 3A-C: Ansicht von der Seite zur Verriegelung des Rollwagens auf dem Routenzuganhänger,
- Fign. 4A-C: Entriegelung des Rollwagens auf dem Routenzuganhänger,
- Fig. 5: zwei Routenzuganhänger mit zentraler Hubeinrichtung mit und ohne Hubplattform,
- Fig. 6: eine Ansicht auf die Hubeinrichtung von unten und
- Fig. 7: eine Ansicht des Verriegelungsmechanismus von unten.

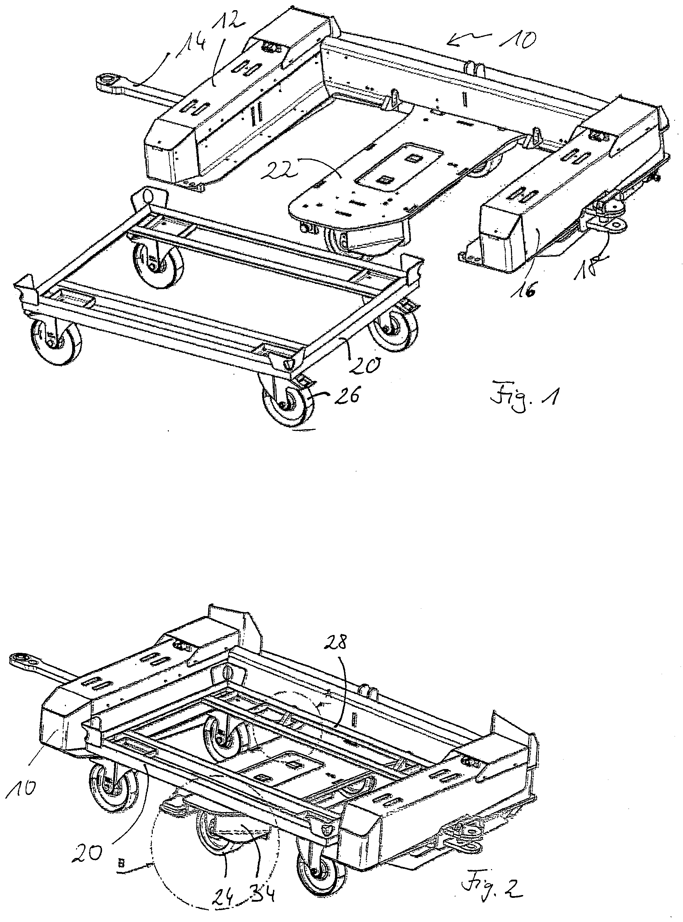

Fig. 1 zeigt in einer perspektivischen Ansicht einen Routenzuganhänger 10, der einen E-förmigen Rahmen besitzt. Der Routenzuganhänger 10 besitzt an seinem vorderen Schenkel 12 eine Deichsel 14, mit der der Routenzuganhänger an einen vorausfahrenden Routenzuganhänger oder an ein Schleppfahrzeug gekoppelt werden kann. Ein hinterer Schenkel 16 ist mit einer Kupplung 18 passend zu der Deichsel 14 ausgebildet. Ein von dem Routenzuganhänger 10 aufzunehmender Rollwagen 20 wird seitlich zwischen die äußeren Schenkel 12 und 16 eingeführt. Der eingeführte Rollwagen stützt sich mit seinem Rahmen auf den mittleren Schenkel 22 und entsprechend ausgebildeten Abstützvorsprüngen an den äußeren Schenkeln 12 und 16 ab.

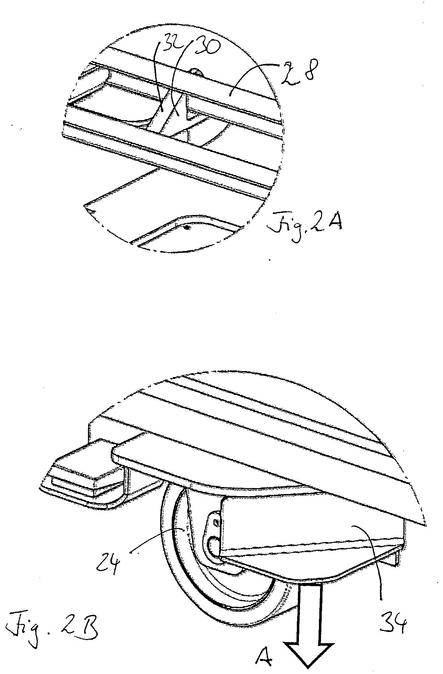

Der dargestellte Routenzuganhänger 10 besitzt unter seinem mittleren Schenkel 22 zwei Laufräder 24. In der angehobenen Position des Routenzuganhängers 10 sind die Räder 26 des Rollwagens 20 vom Boden frei (vgl. Fig. 2).

Fig. 2 zeigt die aufgenommene Position des Rollwagens 20 auf dem Routenzuganhänger 10. Der Rollwagen 20 ist in dem Routenzuganhänger 10 über ein Riegelelement 30 gesichert. Das Riegelelement 30 hintergreift eine Querstrebe 28 des Rollwagens 20, so dass dieser nicht aus dem Bereich zwischen den Schenkeln 12 und 16 entfernt werden kann. Das Riegelelement 30 besitzt wie in Fig. 2A dargestellt eine im Wesentlichen keilförmige Kontur, wobei die Querstrebe 28 über die Schulter 32 des Riegelelements 30 geschoben wird.

Zum Entriegeln des Rollwagens 20 ist ein Fußhebel 34 vorgesehen, der an dem mittleren Schenkel 22 angeordnet ist und zur Entriegelung in Richtung des Pfeils A niedergetreten wird. Der Fußhebel 34 löst ein Absenken des Routenzuganhängers aus und entriegelt so das Riegelelement 30 von der Querstrebe 28, in dem das Riegelelement versenkt wird und der Rollwagen zurückgezogen werden kann.

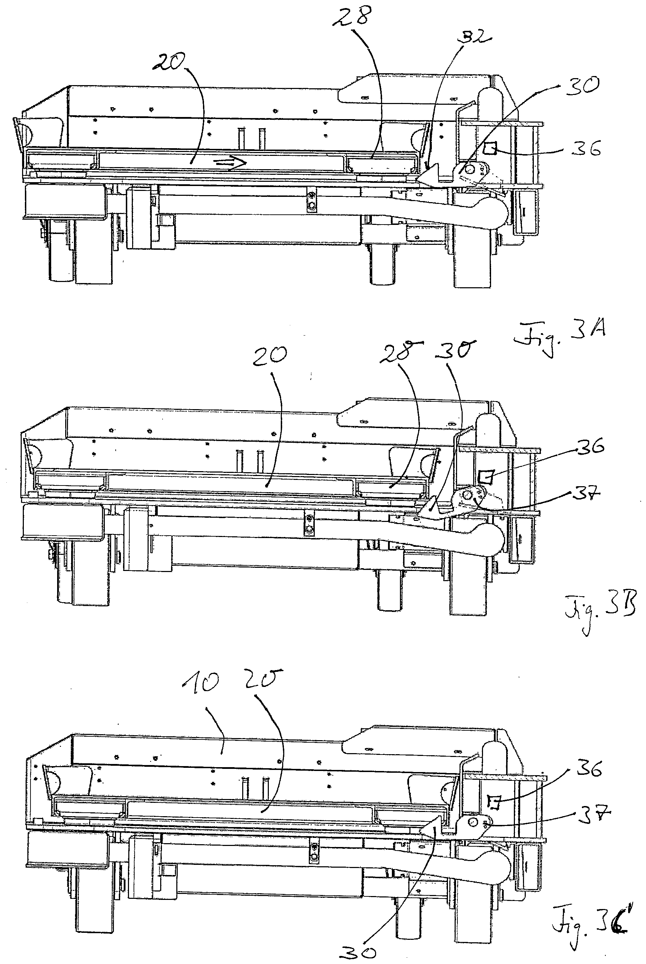

Der genauere Ablauf während der Verriegelung des Rollwagens wird mit Bezug auf die Figuren 3A bis C erläutert, die im Wesentlichen einen Schnitt in Querrichtung durch den Routenzuganhänger 10 zeigen. Der Rollwagen 20 wird mit seiner Querstrebe 28 voran in den Routenzuganhänger eingeschoben und stößt auf die Schulter 32 des Riegelelements 30. Wie in Fig. 3B dargestellt, wird durch das Eigengewicht auch des nicht beladenen Rollwagens das Riegelelement 30 niedergedrückt, wodurch eine mit dem Riegelelement zusammen wirkende Nocke 37 verschwenkt wird. Im niedergedrückten Zustand kann der Rollwagen 20 vollständig in den Transportrahmen eingeschoben werden. Die Nocke 37 ist mit dem Riegelelement 30 gekoppelt und betätigt bei niedergedrücktem Riegelelement 30 einen Betätigungsschalter 36 der Hubeinrichtung. Hierdurch wird die Hubeinrichtung betätigt, um den Routenzuganhänger anzuheben. Fig. 3C zeigt den verriegelten Zustand des Rollwagens 20, bei dem das Riegelelement 30 einen Vorsprung an der hinteren Querstrebe 28 hintergreift und so diesen auf dem Routenzuganhänger 10 sichert. Das Riegelelement 30 ist wieder in seine federvorgespannte Position zurückgekehrt, wodurch der Nocken 37 zurückschwenkt und das Betätigungsschalter 36 der Hubeinrichtung wieder in seine ursprüngliche Position zurückkehrt. Im Zustand der Fig. 3C ist der Rollwagen 20 auf dem Routenzuganhänger verriegelt und dieser angehoben.

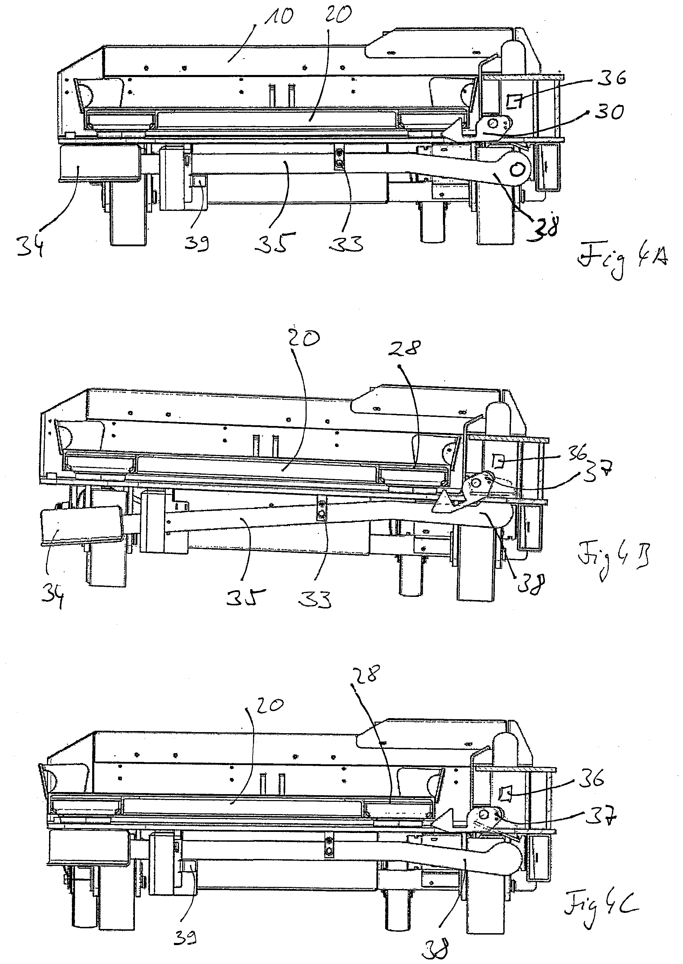

Figuren 4a-c zeigen den Vorgang des Entriegelns des Rollwagens 20 auf dem Routenzuganhänger 10. Ein Fußhebel 34 wirkt über eine quer unter dem Routenzuganhänger verlaufende Stange 35 mit einem Hebel 38 zusammen. Die Stange 35 ist in einem Drehpunkt 33 drehbar gelagert. Durch eine Betätigung des Fußhebels 34 wird über die Stange 35 die Bewegung auf den Hebel 38 übertragen. Zudem wird der Schalter 39 betätigt, der ein Absenken der Hubeinrichtung auslöst. Bei abgesenkter Hubeinrichtung hebt der Hebel 38 den Nocken 37 an, wodurch das Riegelelement 30 zurückgezogen wird. Das zurückgezogene Riegelelement 30 gibt die Querstrebe 28 frei, so dass der Rollwagen 20 von dem Routenzuganhänger entfernt werden kann. Der Betätigungsschalter 36 und der Schalter 39 dienen dazu, ein Heben bzw. ein Senken der Hubeinrichtung auszulösen. Hierzu können statt Schaltern auch Sensoren und /oder Detektoren eingesetzt werden, die das Heben oder Senken auslösen.

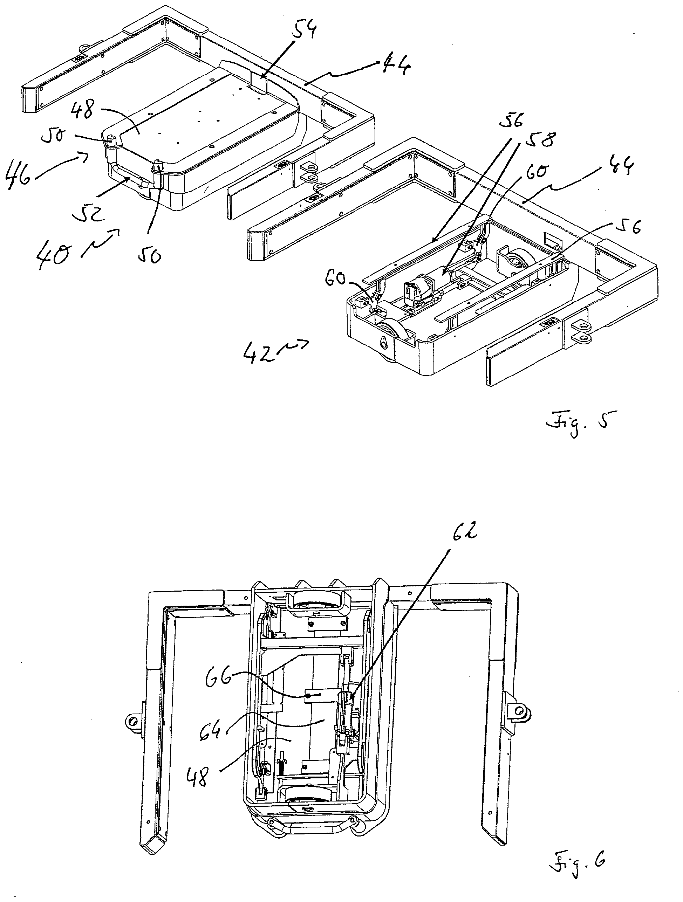

Fig. 5 zeigt zwei Routenzuganhänger 40, 42, die jeweils einen U-förmigen Rahmen besitzen, an dem zwischen den Schenkeln ein Hubabschnitt 46 vorgesehen ist. Der Hubabschnitt 46 besitzt eine in der Höhe anhebbare Hubplattform 48, die den anzuhebenden Rollwagen (nicht dargestellt) trägt. Bei in den Fign. 5 bis 7 dargestellten Routenzuganhängern 40, 42 wird der Rollwagen in den U-förmigen Rahmen 44 eingeschoben und über die Hubplattform 48 angehoben. Hierbei bewegt sich die Hubplattform 48, um den Routenzuganhänger in seinen angehobenen Transportzustand zu versetzen. Bei abgesenkter Hubplattform 48 befindet sich der Routenzuganhänger in seiner abgesenkten Aufnahmeposition. Der Rahmen 44 und der unter der Hubplattform 48 befindliche Teil des Hubabschnitts 46 werden für den Hubvorgang des Rollwagens nicht angehoben.

Die Hubeinrichtung 46 besitzt Sicherungszapfen 50, die in der in Fig. 5 dargestellten Position zur Sicherung eines nicht dargestellten Rollwagens aus der Hubplattform 48 vorstehen. Über einen Fußtaster 52 können die Sicherungszapfen 50 zurückgezogen werden, so dass sie nicht länger aus der Hubplattform 48 vorstehen.

An der zum Rahmen 44 weisenden Seite ist ein Betätigungshebel 54 vorgesehen. Der Betätigungshebel 54 wirkt mit den Sicherungszapfen 50 zusammen. Der vollständig auf die Hubplattform 48 aufgeschobene Rollwagen drückt gegen den Betätigungshebel 54, woraufhin die Sicherungszapfen 50 freigegeben werden und vorstehen.

Fig. 5 zeigt ferner den Aufbau der inneren Hubeinrichtung 46 bei abgenommener Hubplattform 48. Zu erkennen sind zwei Befestigungsleisten 56, auf denen die Hubplattform 48 montiert werden kann. Das Heben und Senken der Hubplattform selbst erfolgt über einen Hydraulikzylinder mit einem zugehörigen Hydraulikaggregat 58. Indem die Befestigungsleisten 56 über einen Dreieckhebel 60 in dem Hubabschnitt 46 gehalten sind, erfolgt eine gleichzeitige Anhebe- und Vorschubbewegung der Befestigungsleisten 56. Dabei ist jede Befestigungsleiste 56 über zwei Dreieckhebel 60 an dem Hubabschnitt 46 befestigt.

Fig. 6 zeigt eine Ansicht von unten, in der der Hubzylinder 62 zu erkennen ist. Ebenfalls ist bei der Hubplattform 48 auf deren Unterseite ein flaches Schiebeelement 64 zu erkennen, dass an seinem einen Ende mit dem Betätigungselement 54 verbunden ist und auf der anderen Seite mit den Sicherungszapfen 50 zusammenwirkt. Das Schiebeelement 64 ist verschieblich in Riegelelementen 66 an der Unterseite der Hubplattform 48 angeordnet.

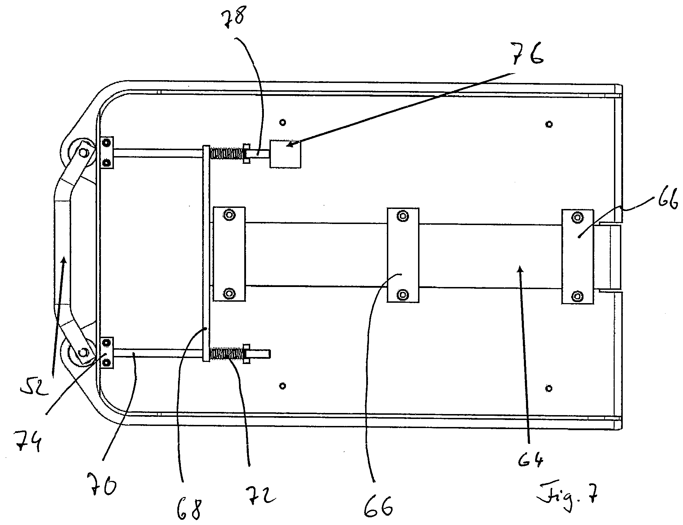

In Fig. 7 ist das Zusammenspiel des Schiebeelements 64 zu erkennen. An seiner dem Rahmen zuweisenden Ende ist das Schiebeelement 64 umgebogen und bildet den Betätigungshebel 54. An seinem zu den Sicherungszapfen 50 weisenden Ende mündet das Schiebeelement 64 in einer Querstange 68, die an ihren Enden jeweils einen Verriegelungsbolzen 70. Der Verriegelungsbolzen 70 ist durch eine Halterung 74 geführt und wirkt mit dem Sicherungszapfen 50 zusammen. Auf die Verriegelungsbolzen übt eine Feder 72 eine Kraft aus, so dass die Verriegelungsbolzen 70 in ihre vorgeschobene Position vorgespannt sind. Zudem ist eine Sensor 76 zu erkennen, der über ein Ende 78 eines der Verriegelungsbolzen 70 detektiert, ob der Verriegelungsbolzen in seine verriegelte Position vorgeschoben ist oder in eine den Sicherungszapfen freigebende Position zurückgeschoben ist. Ferner ist in Fig. 7 zu erkennen, dass der Fußtaster 52 für die Sicherungszapfen an deren Unterseite angeordnet ist.

### Der Betrieb erfolgt wie folgt:

Der Rollwagen wird in der abgesenkten Position der Hubeinrichtung eingeschoben und stößt gegen das Betätigungshebel 54, woraufhin das Schiebeelement 64 in Richtung des Pfeils E zurückgeschoben wird. Das Zurückschieben wird über die Querstange 68 auf die Verriegelungsbolzen 70 übertragen. Die Verriegelungsbolzen 70 werden zurückgezogen, woraufhin Sicherungszapfen 52 freigegeben werden und selbsttätig ausgeschoben werden. Zudem erkennt das Sensormodul 76 den Wechsel in die verriegelte Position und löst den Hubvorgang aus. Im Rahmen des Hubvorgangs wird die Hubplattform zurückgezogen und das Betätigungselement 54 kommt wieder frei.

Nachdem der aufgenommene Rollwagen in der angehobenen Position transportiert wurde, wird der Fußtaster 52 des Routenzuganhängers heruntergedrückt, damit treten die Verriegelungsbolzen 70 in eine Öffnung an den Sicherungszapfen ein. Dies bedeutet, dass aufgrund der Federvorspannung 72 selbsttätig die Verriegelungsbolzen 70 in die Sicherungszapfen eingreifen und diese in der abgesenkten Position halten. Der Sensor 76 erfasst, dass der Verriegelungsbolzen 78 mit seinem Ende sich von dem Sensor 76 entfernt hat. Auf diese Weise stellt der Sensor 76 fest, dass die Sicherungszapfen zurückgezogen wurden und leitet damit einen Senkvorgang ein.

### Bezugszeichenliste

- 10: Routenzuganhänger
- 12: Schenkel
- 14: Deichsel
- 16: Schenkel
- 18: Kupplung
- 20: Rollwagen
- 22: mittlerer Schenkel
- 24: zwei Laufräder
- 26: Räder des Rollwagens
- 28: Querstrebe
- 30: Riegelelement
- 32: Schulter
- 33: Drehpunkt
- 34: Fußhebel
- 35: Stange
- 36: Betätigungsschalter (Heben)
- 37: Nocke
- 38: Hebel
- 39: Schalter (Senken)
- 40: Routenzuganhänger
- 42: Routenzuganhänger
- 44: Rahmen
- 46: Hubabschnitt
- 48: Hubplattform
- 50: Sicherungszapfen
- 52: Fußtaster
- 54: Betätigungshebel
- 56: Befestigungsleisten
- 58: Hydraulikaggregat
- 60: Dreieckhebel
- 62: Hubzylinder
- 64: Schiebeelement
- 66: Riegelelement
- 68: Querstange
- 70: Verriegelungsbolzen
- 72: Feder
- 74: Halterung
- 76: Sensor
- 58: Ende des Verriegelungsbolzens

## Patentansprüche

1. Routenzuganhänger (10) mit einer Hubeinrichtung, die den Routenzuganhänger zwischen einer abgesenkten Aufnahmeposition für einen Rollwagen (20) und einer angehobenen Transportposition für den Rollwagen (20) verstellt, wobei eine Verriegelung (30) für den Rollwagen vorgesehen ist, die den Rollwagen in der Transportposition auf dem Routenzuganhänger sichert, wobei die Verriegelung (30) mit einem Betätigungsschalter für die Hubeinrichtung derart zusammenwirkt, dass bei einem Verriegeln des Rollwagens der Betätigungsschalter (36) für die Hubeinrichtung betätigt wird, um den Rollwagen (20) anzuheben, und die Verriegelung (30) durch einen in der Aufnahmeposition eingeschobenen Rollwagen (20) betätigbar und selbstständig die Position eines vollständig eingeschobenen Rollwagens sichert, **dadurch gekennzeichnet, dass** die Verriegelung mindestens einen Sicherungszapfen, der in einer den Rollwagen sichernden Position vorgespannt ist und zu jedem der Sicherungszapfen einen Verriegelungsbolzen (70) aufweist, der den jeweiligen Sicherungszapfen gegen seine Vorspannung hält und bei vollständig eingeschobenem Rollwagen freigibt.

2. Routenzuganhänger (10) nach Anspruch 1, **dadurch gekennzeichnet, dass** ein von einem Benutzer betätigbare Entriegelung mit einem Schalter für die Hubeinrichtung derart zusammenwirkt, dass bei einem Entriegeln des Rollwagens der Schalter (39) für die Hubeinrichtung betätigt wird, um den Rollwagen abzusetzen.

3. Routenzuganhänger nach Anspruch 1 oder 2, **dadurch gekennzeichnet, dass** bei der Aufnahme des Rollwagens die Hubeinrichtung den Routenzuganhänger aus seiner Aufnahmeposition in seine Transportposition anhebt.

4. Routenzuganhänger nach einem der Ansprüche 1 bis 3, **dadurch gekennzeichnet, dass** über die Entriegelung der Rollwagen freigegeben und die Hubeinrichtung zum Absenken in die Aufnahmeposition betätigt wird.

5. Routenzuganhänger nach Anspruch 4, **dadurch gekennzeichnet, dass** die Entriegelung einen Fußhebel und/oder Fußtaster aufweist.

6. Routenzuganhänger nach einem der Ansprüche 1 bis 5, **dadurch gekennzeichnet, dass** ein E- oder U-förmiger Rahmen vorgesehen ist, zwischen dessen außen liegenden Schenkeln der Rollwagen einschiebbar ist.

7. Routenzuganhänger nach Anspruch 6, **dadurch gekennzeichnet, dass** die Entriegelung an der offenen Seite des Rahmens vorgesehen ist.

8. Routenzuganhänger nach einem der Ansprüche 1 bis 7, **dadurch gekennzeichnet, dass** ein Sensor vorgesehen ist, der sensiert, ob die Verriegelung verriegelt oder entriegelt ist und der bei einem Wechsel zu verriegelter Stellung einen Hubvorgang und bei einem Wechsel zu entriegelter Stellung einen Senkvorgang auslöst.

9. Routenzuganhänger nach einem der Ansprüche 1 bis 8, **dadurch gekennzeichnet, dass** bei einer Hub- und Senkbewegung eine vertikale und eine horizontale Bewegung erfolgt, wobei in der Senkbewegung der Rollwagen mit der horizontalen Bewegung aus dem Anhänger herausgeschoben wird.

## Claims

1. A trailer (10) for a lugger train with a lifting device, which adjusts the trailer between a lowered pick-up position for a trolley (20) and a lifted transport position for the trolley (20), wherein a locking device (30) for the trolley is provided, which secures the trolley on the trailer in the transport position, wherein the locking device (30) cooperates with an actuation switch for the lifting device such that the actuation switch (36) for the lifting device is actuated upon a locking of the trolley in order to lift the trolley (20), and the locking device (30) can be actuated by a trolley (20) inserted into the pick-up position and automatically secures the position of a completely inserted trolley, **characterised in that** the locking device comprises at least one securing pin which is preloaded into a position securing the trolley, and one locking bolt (70) for each of the securing pins, which retains the respective securing pin against its preload, and releases it when the trolley is completely inserted.

2. The trailer (10) for a lugger train according to claim 1, **characterised in that** an unlocking device which can be actuated by an user cooperates with a switch for the lifting device such that upon unlocking the trolley, the switch (39) for the lifting device is actuated in order to put the trolley down.

3. A trailer for a lugger train according to claim 1 or 2, **characterised in that** in the pick-up of the trolley, the lifting device lifts the trailer of the lugger train from its pick-up position into its transport position.

4. A trailer for a lugger train according to one of the claims 1 to 3, **characterised in that** via the unlocking device, the trolley is released and the lifting device is actuated for lowering it into the pick-up position

5. The trailer for a lugger train according to claim 4, **characterised in that** the unlocking device comprises a pedal and/or a foot switch.

6. A trailer for a lugger train according to one of the claims 1 to 5, **characterised in that** a frame in E-shape or U-shape is provided, between the outside located legs of which the trolley can be inserted.

7. The trailer for a lugger train according to claim 6, **characterised in that** the unlocking device is provided at the open side of the frame.

8. A trailer for a lugger train according to one of the claims 1 to 7, **characterised in that** a sensor is provided which senses whether the unlocking device is locked or unlocked, and which triggers a lifting process upon changeover to a locked position, and a lowering process upon a changeover to the unlocked position.

9. A trailer for a lugger train according to one of the claims 1 to 8, **characterised in that** a vertical and a horizontal movement take place in a lifting and a lowering movement, wherein the trolley is ejected out of the trailer by the horizontal movement in the lowering movement.

## Revendications

1. Remorque (10) pour un train à remorques avec un dispositif de levage, qui déplace la remorque entre une position de réception abaissée pour un chariot roulant (20) et une position de transport levée pour le chariot roulant (20), dans laquelle un dispositif de verrouillage (30) pour le chariot roulant est prévu, qui sécurise le chariot roulant sur la remorque dans la position de transport, le dispositif de verrouillage (30) co-opérant avec un commutateur de commande pour le dispositif de levage, de sorte que le commutateur de commande (36) pour le dispositif de levage est actionné pour lever le chariot roulant (20) chez un verrouillage du chariot roulant, et le dispositif de verrouillage (30) peut être actionné par un chariot roulant (20) inséré dans la position de réception et automatiquement sécurise la position d'un chariot roulant complètement inséré, **caractérisée en ce que** le dispositif de verrouillage comporte au moins un ergot d'arrêt qui est précontraint vers une position qui sécurise le chariot roulant, et un boulon de verrouillage (70) pour chacun des ergots d'arrêt qui tient l'ergot d'arrêt respectif contre sa précontrainte, et le libère chez chariot roulant complètement inséré.

2. Remorque (10) pour un train à remorques selon la revendication 1, **caractérisée en ce que** un dispositif de déverrouillage qui peut être actionné par un opérateur coopère avec un commutateur pour le dispositif de levage, de sorte que chez déverrouillage du chariot roulant, le commutateur (39) pour le dispositif de levage est actionné pour mettre le chariot roulant à bas.

3. Remorque pour un train à remorques selon la revendication 1 ou 2, **caractérisée en ce que** chez la réception du chariot roulant, le dispositif de levage lève la remorque du train à remorques de sa position de réception vers sa position de transport.

4. Remorque pour un train à remorques selon l'une quelconque des revendications 1 à 3, **caractérisée en ce que** via le dispositif de déverrouillage, le chariot roulant est libéré et le dispositif de levage est actionné pour l'abaisser vers la position de réception.

5. Remorque pour un train à remorques selon la revendication 4, **caractérisée en ce que** le dispositif de déverrouillage comporte un pédale et/ou un commutateur à pied..

6. Remorque pour un train à remorques selon l'une quelconque des revendications 1 à 5, **caractérisée en ce que** un cadre en forme de E ou U est prévu, entre les jambes extérieures duquel le chariot roulant peut être inséré.

7. Remorque pour un train à remorques selon la revendication 6, **caractérisée en ce que** le dispositif de déverrouillage est prévu sur le coté ouvert du cadre.

8. Remorque pour un train à remorques selon l'une quelconque des revendications 1 à 7, **caractérisée en ce que** un capteur est prévu qui sent si le dispositif de déverrouillage est verrouillé ou déverrouillé, et qui enclenche une procédure de levage chez un changement à la position verrouillée, et une procédure d'abaissement chez un changement à la position déverrouillée.

9. Remorque pour un train à remorques selon l'une quelconque des revendications 1 à 8, **caractérisée en ce que** un mouvement vertical et un mouvement horizontal prennent place dans un mouvement de levage et d'abaissement, le chariot roulant étant éjecté de la remorque par le mouvement horizontal dans le mouvement d'abaissement.
